# EUROPEAN PATENT SPECIFICATION

(11) **EP 3 965 914 B1**
(45) Date of publication and mention of the grant of the patent: **12.04.2023**
(21) Application number: 20855763.7
(22) Date of filing: 17.08.2020
(51) Int. Cl.: B01D 33/23, B01D 33/21

(54) **FILTER ELEMENT FOR FILTER DISC COMPRISING ELEVATED RESTRICTION EDGES**
FILTERELEMENT FÜR FILTERSCHEIBE MIT ERHÖHTEN BEGRENZUNGSKANTEN
ÉLÉMENT FILTRANT POUR DISQUE FILTRANT COMPRENANT DES BORDS DE RESTRICTION ÉLEVÉS

(30) Priority: 19.08.2019 SE 1950945
(43) Date of publication of application: 16.03.2022
(73) Proprietor: Sulzer Management AG, 8401 Winterthur (CH)
(72) Inventor: PERSSON, Nils-Åke, 222 27 Lund (SE)
(74) Representative: IPS Irsch AG
(86) International application number: PCT/SE2020/050795
(87) International publication number: WO 2021/034258

(56) References cited:
- EP-A1- 0 298 286
- WO-A1-2009/105015
- WO-A1-2009/105015
- WO-A1-2018/222130
- WO-A1-2018/222130
- US-A- 3 425 149
- US-A1- 2017 043 281

## Description

### Technical field

The present solution relates generally to a filter element for use in a filter disc for filtering liquid containing particles, wherein a plurality of filter elements are arranged on a rotor shaft in a manner allowing liquid communication between the inside of the filter elements and the inside of the rotor shaft.

### Background art

Filtering of liquids, such as wastewater, can for example be conducted with rotary disc filters comprising one or more filter discs. When filtering is to take place from the inside out, the rotor shaft has a hollow core and liquid to be filtered is fed to the inside of the rotor shaft. The filter element and the rotor shaft have openings through which the liquid to be filtered is fed to the inside of a filter element. The filtering takes place from the inside of the filter element and out though a filter cloth. Particles in the liquid are separated on the inside of the filter cloth. During rotation, when emerging out of the water, each filter elements could be cleaned by a water jet spraying the filter cloth. Particles cleaned from the filter cloth fall into the rotary shaft and onto a sludge collector, the particles are then carried out of the system together with rest of the waste flow.

The filter disc comprises a plurality of filter elements attached to a rotor shaft creating the disc. The rotor shaft is usually capable of carrying a plurality of such disc filters and is for example a hollow drum that can host liquid. During operation, the rotor shaft carrying the filter discs is rotated and the filter discs are during part of the revolution immersed in liquid.

Filter discs comprising filter elements allowing fluid connection through passages between adjacent filter elements have drawbacks, especially when filtering particles. Passages in the edge structures do not only allow for liquid to pass between adjacent filter elements when the filter disc rotates, particles are also transferred between the filter elements via the passages. The result of this is less efficient separation of particles. In addition, particles that pass between filter elements degrade and are torn into smaller parts making them more difficult to clean off the filter cloth at a later stage.

In prior art solutions with smaller passages exist that would prevent particles from passing between filter elements. However, the passages have an important function to allow liquid to flow between the filter elements and reducing the size of the passages would not be beneficial. Smaller passages would increase backflow from the filter elements to the rotary shaft effectively increasing the amount of liquid that needs to be filtered when liquid is filtered multiple times.

Thus, it would be beneficial to reduce the number of particles that are transferred through the passages between filter elements without increasing the amount of backflow from the filter elements into the rotary shaft.

Patent publications WO 2018/222130 A1 and WO 2009/105015 A1 disclose filter discs provided with filter elements. Each filter element has at least one passage in an edge structure for liquid communication between the inside of an adjacent filter element when the filter elements are assembled forming a filter disc. No means for minimizing the transportation of particles between filter elements are provided.

### Summary of invention

An object of the present solution is to minimize the transportation of particles between filter elements in a disc filter.

Another object of the present solution is to substantially maintain the passage area between filter elements in a disc filter.

Another object of the present solution is to decrease degradation of particles during filtration in a disc filter to maintain the particles as large as possible.

Yet another object of the present solution is to increase efficiency of filtration in a disc filter.

Thus, the solution relates to a filter element for use in a filter disc, wherein a plurality of filter elements are arranged on a rotor shaft in a manner allowing liquid communication between the inside of the filter elements and the inside of the rotor shaft. The filter element has at least one passage in an edge structure for liquid communication between the inside of adjacent filter elements when the filter elements are assembled forming a filter disc. The passage has one or more elevated retention edges extending along at least one edge of the passage inwards towards the inside (4) of the filter element.

It is one advantage with the filter element that the passages have one or more elevated retention edges. The elevated retention edges direct particles inside the filter element towards the rotor shaft during rotation, thus reducing the number of particles being transferred between adjacent filter elements. The elevated retention edges are arranged at a distance from the filter cloth to allow particles to slide between the filter cloth and the elevated retention edge / edges. Since the elevated retention edge extends inwards towards the inside of the filter element particles are maintained within the filter element during rotation. When the filter element is rotated through the surface and out of the liquid the particles slide down on the side of the elevated retention edges and into the space between the elevated retention edges and the filter cloth down through openings at the shaft to the sludge collector instead of passing into the next filter element.

According to one embodiment an elevated retention edge extends on two side of one or more passages at the edge structure of a filter element.

According to one embodiment an edge structure has two elevated retention edges that extends along the entire length of the edge structure.

According to one embodiment of the filter element the elevated retention edge extends into the inside of the filter element in the rotation direction of the filter disc. It is an advantage with the present solution that in one embodiment the elevated retention edge extends in the rotation direction of the filter disc.

According to one embodiment of the filter element the elevated retention edge is tilted inwards towards the passage. It is one advantage that more space is provided for particles to slide outside of the elevated retention edge, i.e. between the filter cloth and the elevated retention edge, when the elevated retention edge is tilted inwards towards the passage. Another advantage is that the passage area is substantially maintained.

According to one embodiment of the filter element the elevated retention edge is a separate insert adapted to fit in the passage. It is an advantage with a separate insert that elevated retention edges can be retrofitted to filter elements.

According to one embodiment of the filter element the elevated retention edge comprises openings to reduce liquid disturbance. According to one embodiment the elevated retention edge is made of a mesh, net, or similar material allowing liquid to pass through while retaining particles.

### Brief description of drawings

The invention is now described, by way of example, with reference to the accompanying drawings, in which:
Fig. 1 illustrates a filter assembly comprising multiple filter discs with filter elements.
Fig. 2 illustrates one embodiment of a filter element comprising elevated retention edges according to the invention.
Fig. 3 illustrates one embodiment of a filter element with inserts comprising elevated retention edges according to the invention.
Fig. 4 illustrates a prior art solution of a disc filter.
Fig. 5 illustrates how elevated retention edges of a filter element direct particles into the rotary shaft of a disc filter according to the invention.
Fig. 6 illustrates another embodiment of a filter element according to the invention.
Fig. 7 illustrates an embodiment of an insert for a filter element passage in a filter element.
Fig. 8 illustrates an embodiment of an insert for a filter element passage.
Fig. 9 illustrates one embodiment of an edge structure and framework for a filter element with passages comprising elevated retention edges.
Fig. 10 illustrates another embodiment of a filter element comprising elevated retention edges according to the invention.

### Description of embodiments

In the following, a detailed description of the different embodiments of the solution is disclosed under reference to the accompanying drawings. All examples herein should be seen as part of the general description and are therefore possible to combine in any way of general terms. Individual features of the various embodiments and aspects may be combined or exchanged unless such combination or exchange is clearly contradictory to the overall function of the filter disc and/or filter elements.

Briefly described the solution relates to a filter element for use in a filter disc. A plurality of filter elements is arranged on a rotor shaft in a manner allowing liquid communication between the inside of the filter elements and the inside of the rotor shaft. The filter elements are further adapted to allow liquid communication between adjacent filter elements via passages in edge structures of said filter elements. The passages have elevated retention edges to reduce the number of particles that passes through the passages.

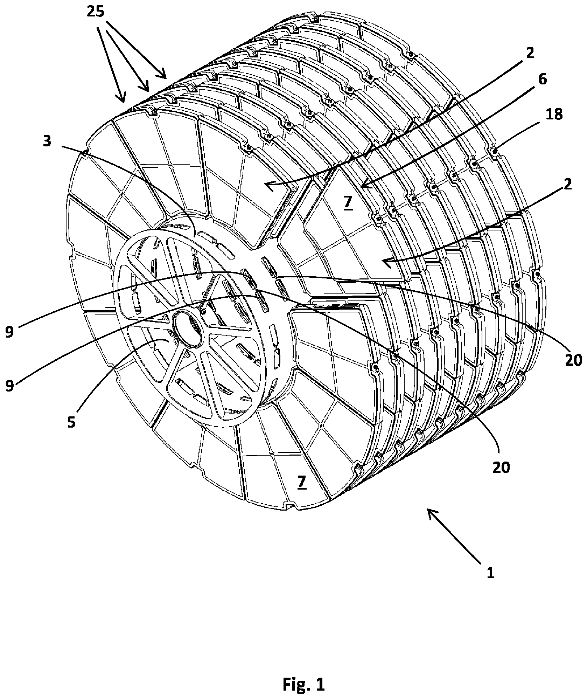

Figure 1 illustrates a disc filter 1 comprising a plurality of filter discs 25 arranged on a rotor shaft 3. The plurality of filter discs 25 together creates a disc filter 1 being the assembled structure used for filtering liquids. The filter discs 25 each comprises multiple filter elements 2 that are arranged around the rotor shaft 3. Normally, each filter element 2 is attached to the rotor shaft 3 via some form of attachment means 18. However, the attachment looks different depending on the model of disc filter. The number of filter elements 2 in each filter disc 25 as illustrated in figure 1 is only an example and any number of filter elements 2 can be arranged on the rotor shaft 3 creating a filter disc 25. However, it should be noted that a filter disc 25 based on a filter element 2 according to the present solution comprise at least two filter elements 2.

Figure 1 further illustrates the rotor shaft 3 with openings 9 for liquid communication between filter elements 2 and rotor shaft 3. The rotor shaft 3 is any form of drum or hollow shaft that can host liquid and is illustrated for example in figure 1. When liquid is filtered from the inside and out the rotor shaft 3 first receives the liquid and the liquid is thereafter passed through the openings 9 into filter elements 2. In different embodiments different numbers of openings 9 could be adapted for liquid connection between a filter element 2 and the rotor shaft 3. The number of openings 9 may in different embodiments be for example one, two, or three openings 9 per filter element 2. However, any number of opening 9 suitable for the solution could be used. The rotor shaft 3 is at least in part hollow and thereby has an inside 5 wherein liquid can flow.

The filter elements 2 can be fastened in different ways to the rotor shaft 3, for example in one embodiment via a long bolt fastened into a threaded opening 20 in the shaft. In one embodiment a fastening means 18, such as a nut or bolt, is further arranged in the opposite end of the long bolt to secure the filter element 2.

According to another embodiment multiple bolts are used to attach each filter element 2. According to some embodiments a gasket is arranged between the filter element 2 and the rotor shaft 3.

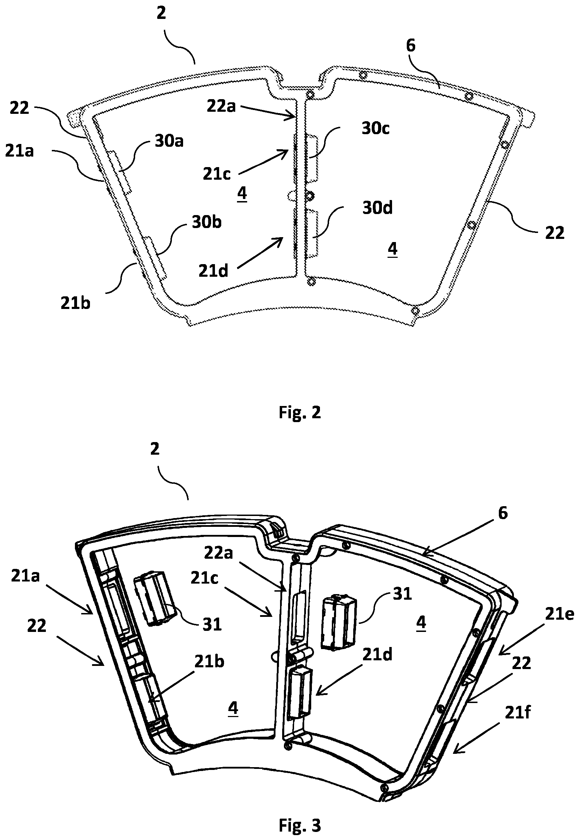

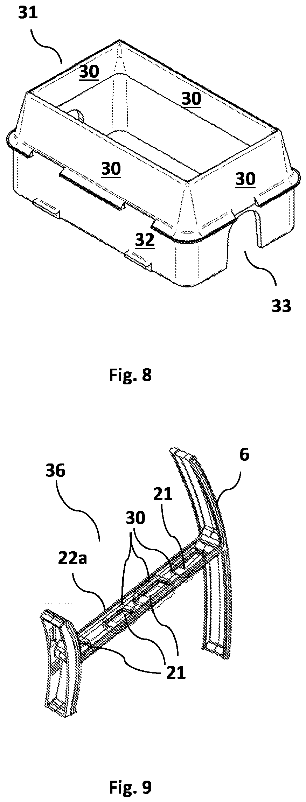

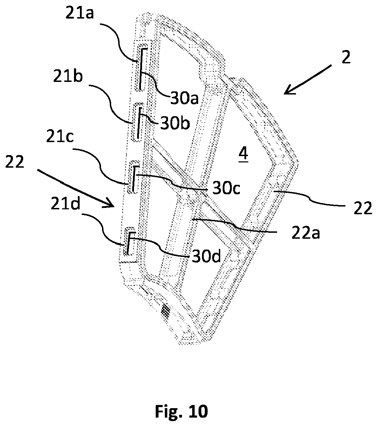

With reference to figures 2 and 3, a filter element 2 is according to one embodiment a single component comprising a framework 6, a filter cloth 7 (not shown in figures 2 and 3), two edge structures 22 and in in this embodiment a central edge structure 22a, and a number of passages 21a, 21b, 21c, 21d, 21e, and 21f adapted to allow liquid connections to adjacent filter elements 2 and if a central edge structure 22a exists also allow liquid connection within a filter element 2. In some embodiments the central edge structure 22a comprises no passages and instead comprises a single open area, as shown in the embodiment of figure 10. The inside 4 of a filter element 2 is a compartment created by the space between two edge structures 22 of a filter element 2 independently if said edge structures 22 are part of the same unit as illustrated in figure 3 or if it is comprised by two units as illustrated in figure 9 wherein the unit only has one edge structure 22. The framework 6 is covered with the filtration cloth (not shown) covering the open areas in the framework 6 and enclosing the inside 4.

The embodiment as shown in figure 2 has elevated retention edges 30a, 30b both in the passages 21a, 21b that are in liquid communication with an adjacent filter element being subsequent in a flow direction of liquid and elevated retention edges 30c, 30d in the passages 21c, 21d in a center member 22a of the filter element 2. The elevated retention edges 30a-d could be either produced as part of the framework 6 or as a separate part. In one embodiment the elevated retention edges each surround the passages, in another embodiment an elevated retention edge extends along the edge of multiple passages 21. In yet another embodiment the elevated retention edges extend along the entire length of an edge structure 22. In yet another embodiment the elevated retention edges extend along multiple passages 21. In one embodiment the elevated retention edges extend in the extension direction of the edge structure, preferably as one retention edge at each side of the passages 21.

Figure 3 illustrates an embodiment wherein the elevated retention edges are part of an insert 31 being a separate part adapted to fit in the passages 21a-f of filter element 2. The elevated retention edges can thus be retrofitted to already existing filter elements 2.

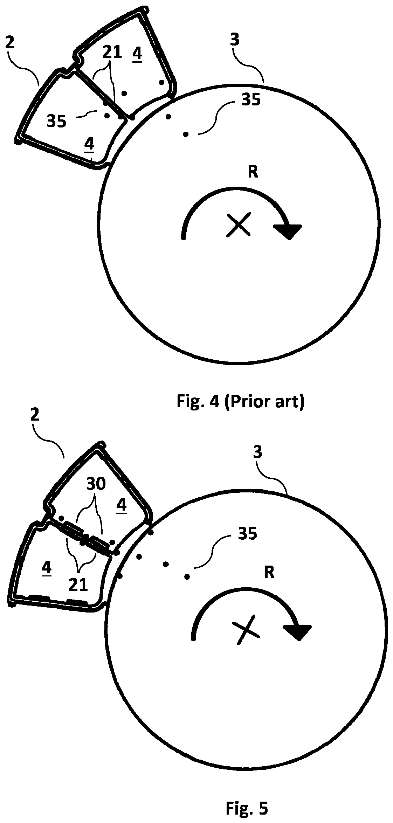

Figure 4 is an overall view that illustrates a prior art solution without any elevated retention edges. For illustrative purposes, only one filter element 2 is shown but the person skilled in the art understands that the filter element 2 is part of a filter disc 25 as illustrated for example in figure 1. The rotor shaft 3 rotates in a rotation direction R as illustrated in figure 2. The water level (or level of liquid, not shown) is such that the filter element 2 is submerged during part of the rotary shaft 3 revolution, in the position as illustrated in figure 2 the filter element 2 is emerging through the surface of the liquid. Particles 35 fall both into the rotary shaft 3 where they are collected by a sludge collector and into the next filter element 2. In figure 2, the next filter element 2 is actually another inside 4 of the same filter element 2, as in the embodiment shown in figures 2 and 3. However, as understood by the person skilled in the art, the filter elements 2 can have different shapes and forms within the scope of the solution as disclosed herein.

Figure 5 illustrates an embodiment of the present solution wherein elevated retention edges 30 as disclosed herein have been implemented to the prior art solution as illustrated in figure 4. The elevated retention edges 30 are arranged in a center member of the filter element 2. As can be seen, the number of particles 35 passing through the passages 21 is significantly reduced. Instead, the particles 35 are restricted by the elevated retention edges 30 and slide down into the rotary shaft 3 wherein they are collected and separated from the filtration liquid.

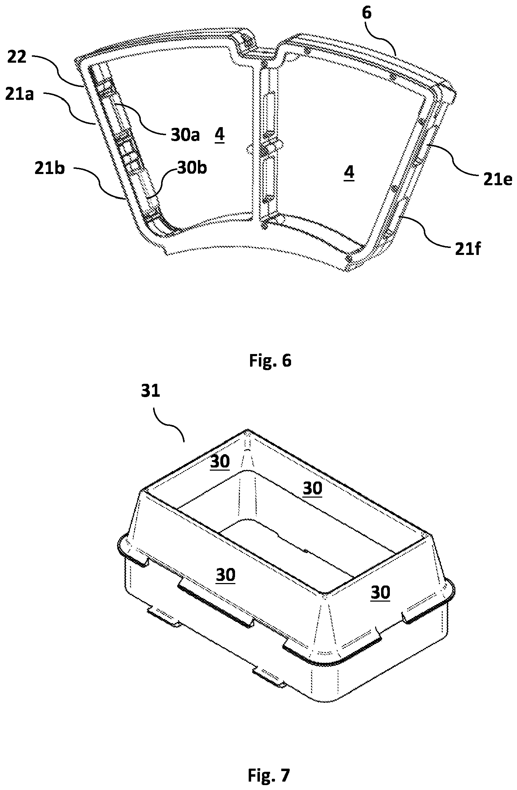

Figure 6 illustrates another embodiment of a filter element 2, wherein elevated retention edges 30a, 30b only are arranged for the passages 21a, 21b that are in liquid communication with an adjacent filter element being subsequent in a flow direction of liquid.

Figure 7 illustrates one embodiment of an insert 31 adapted to fit in a passage. The insert 31 has elevated edges 30 arranged at an angle.

Figure 8 illustrates another embodiment of an insert 31 adapted to fit in a passage 21, wherein the insert 31 comprises an aperture 33 for attachment means 18, such as a long bolt. It shall be noted that the appended figures only disclose examples of possible embodiments of the solution as disclosed herein.

Figure 9 illustrates a module 36 that, when put together with another module 36, creates a filter element. In this embodiment, the space delimited by two modules is covered by two filter cloth frames (not shown), one on each side of the space, thereby creating the filter element. Thereby, in the embodiment as illustrated in figure 9, the edge structure is arranged as a center member 22a. As understood by the person skilled in the art the filter elements may have different shape and form within the scope of the solution as disclosed herein.

Figure 10 illustrates a filter element 2 wherein elevated retention edges 30a, 30b, 30c, and 30d are provided in passages 21a, 21b, 21c, and 21d, respectively, only for the passages that are in liquid communication with an adjacent filter element being subsequent in a flow direction of liquid. This filter element has one single inside 4 since the central structure 22a is essentially an opening, allowing free flow of water within the space defined by the edge structure 22 and the filter cloths (not shown) attached thereto. Thus, this design is similar to the one shown in the overall view of figure 1.

## Claims

1. A filter element (2) for use in a filter disc (25), wherein a plurality of filter elements (2) are arranged on a rotor shaft (3) in a manner allowing liquid communication between the inside (4) of the filter elements (2) and an inside (5) of the rotor shaft (3), wherein each filter element (2) has at least one passage (21) in an edge structure (22) for liquid communication between the inside (4) of an adjacent filter element (2) when the filter elements (2) are assembled forming a filter disc (25), **characterized in that** the passage (21) has an elevated retention edge (30) extending along at least one edge of the passage (21) inwards towards the inside (4) of the filter element (2).

2. The filter element (2) according to claim 1, wherein the elevated retention edge (30) extends into the inside (4) of the filter element (2) in a rotation direction (R) of the filter disc (25).

3. The filter element (2) according to any one of claims 1-2, wherein the elevated retention edge (30) is tilted inwards towards the passage (21).

4. The filter element (2) according to any one of claims 1-3, wherein the elevated retention edge (30) is a separate insert (31) adapted to fit in the passage (21).

5. The filter element (2) according to any one of claims 1-4, wherein the elevated retention edge (3) comprises openings to reduce liquid disturbance.

6. The filter element (2) according to any one of claims 1-5, wherein the elevated retention edge (30) extends along the edges of multiple passages (21).

## Patentansprüche

1. Filterelement (2) zur Verwendung in einer Filterscheibe (25), wobei eine Vielzahl von Filterelementen (2) auf einer Rotorwelle (3) in einer Weise angeordnet ist, die eine Flüssig-Verbindung zwischen der Innenseite (4) der Filterelemente (2) und einem Inneren (5) der Rotorwelle (3) ermöglicht, wobei jedes Filterelement (2) mindestens einen Durchgang (21) in einer Randstruktur (22) für eine Flüssig-Verbindung zwischen der Innenseite (4) eines benachbarten Filterelements (2) aufweist, wenn die Filterelemente (2) zu einer Filterscheibe (25) zusammengesetzt sind, **dadurch gekennzeichnet, dass** der Durchgang (21) einen erhöhten Rückhalterand (30) aufweist, der sich entlang mindestens eines Rands des Durchgangs (21) nach innen in Richtung der Innenseite (4) des Filterelements (2) erstreckt.

2. Filterelement (2) nach Anspruch 1, wobei sich der erhöhte Rückhalterand (30) in die Innenseite (4) des Filterelements (2) in einer Drehrichtung (R) der Filterscheibe (25) erstreckt.

3. Filterelement (2) nach einem der Ansprüche 1 bis 2, wobei der erhöhte Rückhalterand (30) nach innen zum Durchgang (21) hin geneigt ist.

4. Filterelement (2) nach einem der Ansprüche 1 bis 3, wobei der erhöhte Rückhalterand (30) ein in den Durchgang (21) passender separater Einsatz (31) ist.

5. Filterelement (2) nach einem der Ansprüche 1 bis 4, wobei der erhöhte Rückhalterand (3) Öffnungen zur Verringerung von Flüssigkeitsstörungen aufweist.

6. Filterelement (2) nach einem der Ansprüche 1 bis 5, wobei sich der erhöhte Rückhalterand (30) entlang der Ränder mehrerer Durchgänge (21) erstreckt.

## Revendications

1. Un élément filtrant (2) pour être utilisé dans un disque filtrant (25), dans lequel une pluralité d'éléments filtrants (2) sont disposés sur un arbre de rotor (3) de manière à permettre une communication de liquide entre l'intérieur (4) des éléments filtrants (2) et un intérieur (5) de l'arbre de rotor (3), dans lequel chaque élément filtrant (2) a au moins un passage (21) dans une structure de bord (22) pour une communication de liquide entre l'intérieur (4) d'un élément filtrant adjacent (2) lorsque les éléments filtrants (2) sont assemblés en formant un disque filtrant (25), **caractérisé en ce que** le passage (21) a un bord de rétention élevé (30) s'étendant le long d'au moins un bord du passage (21) vers l'intérieur (4) de l'élément filtrant (2).

2. L'élément filtrant (2) selon la revendication 1, dans lequel le bord de rétention élevé (30) s'étend dans l'intérieur (4) de l'élément filtrant (2) dans une direction de rotation (R) du disque filtrant (25).

3. L'élément filtrant (2) selon l'une des revendications 1 à 2, dans lequel le bord de rétention élevé (30) est incliné vers l'intérieur en direction du passage (21).

4. L'élément filtrant (2) selon l'une des revendications 1 à 3, dans lequel le bord de rétention élevé (30) est un insert séparé (31) adapté pour s'ajuster dans le passage (21).

5. L'élément filtrant (2) selon l'une des revendications 1 à 4, dans lequel le bord de rétention élevé (3) comprend des ouvertures pour réduire la perturbation du liquide.

6. L'élément filtrant (2) selon l'une des revendications 1 à 5, dans lequel le bord de rétention élevé (30) s'étend le long des bords des passages multiples (21).
